# EUROPEAN PATENT SPECIFICATION

(11) **EP 3 090 902 B1**
(45) Date of publication and mention of the grant of the patent: **11.07.2018**
(21) Application number: 15166894.4
(22) Date of filing: 08.05.2015
(51) Int. Cl.: B60R 11/02, H04M 1/04

(54) **A PHONE HOLDER FOR A VEHICLE**
TELEFONHALTER FÜR EIN FAHRZEUG
SUPPORT DE TÉLÉPHONE POUR UN VÉHICULE

(43) Date of publication of application: 09.11.2016
(73) Proprietor: Volvo Car Corporation, 40 531 Göteborg (SE)
(72) Inventor: Ekhem, Alexander, 519 90 Horred (SE); Guldstrand, Peter, 438 92 Härryda (SE)
(74) Representative: Volvo Car Corporation

(56) References cited:
- US-A1- 2006 145 039

## Description

### TECHNICAL FIELD

The invention relates to an arrangement for holding a phone in a vehicle. In particular is it intended to be useful for a so called "smart phone".

### BACKGROUND

In the automotive industry there is generally a desire to make solutions for adapting the interior of the vehicle according to todays need for a driver or passenger. One such need which has developed during recent years is to provide a phone holder where a phone may be located and kept safely while the vehicle is driven. The phone holder may for example be located at a location where the screen of the phone may be visible for a driver, e.g. for using a map in the phone for driving guidance. Another possible feature may be that the holder is provided with contacts for charging of the phone while the vehicle is driven. There may also be contacts provided for connecting the phone to the vehicle electronics and thus show relevant content on a vehicle mounted display and control the phone by using vehicle control buttons.

There are phone holders known today which may be used for holding a phone in a steady position in a vehicle during driving. One such phone holder, according to the preamble of claim 1, is for example disclosed in US 2006 / 145 039 which describes a phone holder which holds the phone in a support structure. The phone is kept steady in the support structure by a pivotable, spring-loaded device which may be released by push buttons. Further examples of phone holders are disclosed in DE 203 06 910 U, US 5,996,866, EP 585 011 and EP 1 973 313.

However, even though these documents describe different phone holders there is a desire to provide a robust arrangement which allows easy insertion of a phone in the holder, providing a desired holding force which may keep the phone in place during rough conditions and allowing easy removal of the phone from the phone holder when desired.

### SUMMARY

Consequently, an object of the invention is to provide a robust phone holder for a vehicle. In particular aims the present invention to provide a phone holder into which it is easy to insert a phone and which maintain the phone under strong external forces, e.g. in case the vehicle is subject to an accident or a strong braking action.

Hence, the above-mentioned object is achieved by a phone holder according to claim 1. The phone holder comprises a rear support structure, e.g. a backing plate, intended to face a backside of a phone and a front support structure, e.g. a frame structure extending along both the lateral sides and optionally also the lower side, intended to face a front side of a phone. The phone holder further comprises a side support structure in order to laterally align a phone in the phone holder. The side support structure usually comprises a structure on each side, e.g. a left and right support structure, but it may be sufficient with a side support structure on only one side for aligning a phone to be placed in the desired position. The side support structure may also be used as bearing structures for connecting the rear support structure and front support structure. The support structures define together a slot opening through which a phone may be inserted.

The phone holder is further provided with a rotatable member, e.g. a wheel or roller. The rotatable member may be designed to have a sticky surface or a surface made of friction material. The rotatable member may be made of a single material having desired frictional properties or having a core of one material and having a surface layer from a different material in order to get the right frictional forces from the rotatable member. If a single material should be used, natural or synthetic rubber could be a suitable choice for providing a rotatable member having a surface with a rather high friction and while also providing some resiliency of the rotatable member, a property which may be desired and will be discussed more below. The rotatable member is located in or adjacent to one of the support structures such that the surface of the rotatable member forms part of a supporting structure being in contact with a phone inserted in the phone holder. The rotatable member is preferably designed to be suspended close to a support structure and adjacent an opening in the support structure such that the surface of the rotatable member may be set to slightly protrude through the opening in the support in order to assure that the rotatable member may be in contact with a phone inserted in the phone holder.

The phone holder may switch between a first, insertion mode (I) and a second, release mode (II). The rotatable member has a control mechanism which may be used to set the phone holder in the first, insertion mode (I). In this first, insertion mode the rotatable member is designed to be in contact with a phone when the phone is inserted in the phone holder and said rotatable member may rotate freely in the insertion direction (ID) while having a latch preventing the rotatable member from being able to rotate in the release direction (RD). In this mode will thus the rotatable member function in order to allow insertion of a phone in the insertion direction (ID) while preventing a phone from being moved in the release direction (RD). The insertion mode is suitable to be the default mode, i.e. the mode in which the holder is when no button is pressed, so as to be ready to receive a phone as default.

As disclosed above, the control mechanism further has a second, release mode (II) in which a phone may be moved in the phone holder in the release direction (RD) without being prevented by the rotatable member. This mode may be selected by actively pressing a button or influencing a control lever and holding it in a desired position. In this case, when the button or lever is released, could the phone holder be designed to return to its default state being the first, insertion mode (I).

Hence, the phone holder is designed to be able to switch between at least two modes whereof a first, insertion mode (I) at least comprises the feature of allowing the phone being inserted in the phone and a second, release mode (II) at least comprising the feature of allowing the phone to be released from its position in the phone holder. In general, the first, insertion mode (I) also comprises the feature of preventing the phone from being released from the phone holder, i.e. in the insertion mode (I) is the phone holder designed to only allow a phone to be moved in the insertion direction and the insertion mode is thus used during insertion and withholding of the phone in the phone holder. However, this first mode could also be divided into two sub-modes whereof one being a pure insertion mode (I a) in which the phone may be moved in both directions and thereafter could there be a withholding mode (I b) in which movement in the release direction is prevented. In this withholding sub-mode (I b) of the first, insertion mode (I) may the phone be allowed or prevented from being moved in the insertion direction. As is obvious, and indifferent of if the first, insertion mode (I) is divided into sub modes or not, will this first, insertion mode (I) comprise the feature of allowing insertion of a phone in the phone holder and withholding it when being inserted in the phone holder. According to a first embodiment, the phone holder and its control mechanism are designed to change from the first, insertion mode (I) to the second, release mode (II) by moving the rotatable member away from being located in a position in which a phone inserted in the phone holder is in contact with the rotatable member to a position in which a phone inserted in the phone holder is not in contact with the rotatable member. Hence, the position of the rotatable member relative the phone is physically changed. This may for example be made by changing the position of the rotatable member relative the phone holder, i.e. relative the support structure in which the rotatable member is located.

Another way of achieving the same effect, i.e. to create a distance between the phone and the rotatable member, could of course be to allow the phone to change its position when located in the phone holder such that the position of the phone relative the phone holder is allowed to change and thus enable a release of the phone from the phone holder.

Still another option for physically separating the rotatable member from being in contact with the phone could be to reduce the radius of the rotatable member such that the reduction of the radius creates a distance between the rotatable member and the phone.

According to a second embodiment, the phone holder and its control mechanism are designed to change from the first, insertion mode (I), in which reverse rotation of the rotatable member is prevented by a latch, to the second, release mode (II), by disconnecting the latch working in the release direction (RD) of the rotatable member and thus allowing the rotatable member to rotate freely in the RD, i.e. the reverse direction. By latch is herein meant any kind of braking mechanism which prevents the rotatable member from being rotated, in general working to prevent rotation in a specific direction. In general, the rotatable member is designed to be able to rotate freely in the insertion direction (ID) in both the first, insertion mode (I) and in the second, release mode (II). However, the rotatable member could also be designed to only rotate freely in the ID in the first, insertion mode (I) and having a latch mechanism working in the ID when the phone holder is set to the second, release mode (II).

Below follow a number of features which may be added to the phone holder regardless of if it is designed according to the first or second embodiment described above. The rotatable member is designed to resiliently pressing or pushing on a surface of a phone in the phone holder when the control mechanism is set in the first, insertion mode (I).

The resilient pressing force of the rotatable member working on a phone located in the phone holder may be achieved by designing the rotatable member to be attached to the phone holder by a resiliently attached axle. For example, the axle of the rotatable member may be attached to the holder by some kind of springs or the axle may be attached to a resilient portion of the phone holder designed to provide a pressing force from the rotatable member onto a phone located in the phone holder.

Another way of achieving a pressing force and a rotatable member which is resiliently pressing on a phone in a phone holder is to design the rotatable member to be made by a resilient material, e.g. some kind of rubber material having a desired elasticity.

The rotatable member should be adjusted to be pressing with a desired force against a phone comprised in the phone holder in order to maintain the phone in the holder, e.g. in the case of an accident. However, the force is dependent on the position of the phone as well as the material of the phone holder and the phone. For example, if the phone is kept in upright position, inserted from above, the force needed to maintain the phone in the holder will be rather low in the case of a normal accident having a major force in the longitudinal direction. On the other hand, if the phone is laying down, having an insertion and release direction essentially parallel to the longitudinal extension of the vehicle, there will be needed a larger retaining force in the same occasion. In any case, the pressing force should be at least 15 Newton, in many cases be at least 30 newton, when the phone is placed in the phone holder.

In order to provide a phone holder which may keep a phone in place in a safe manner, the surface of the rotatable member should be made of a high frictional or sticky material, e.g. rubber or surface modified plastics.

The rotatable member may be comprised in any portion of the phone holder intended to be in contact with a phone inserted in the phone holder. However, the rear support structure is generally thought to be a suitable location for the rotatable member.

There may also be further rotatable members present in the phone holder. There could of course be several rotatable members located in the same support structure and pressing towards the same direction. There could also be a second rotatable member present which is located in a support structure different from the one which the first rotatable member is located. These rotatable members could be located at opposite sides, e.g. at support structures facing each other, such that a phone inserted in the phone holder will be squeezed between a pair of rotatable members.

The phone holder may comprise connectors designed to fit into a connecting slot of the phone. These connectors may be located in a lower stop portion for electrically connecting a phone when it is fully inserted in the phone holder. The connector could be used for charging the phone and/or to connect the phone to vehicle on board electronics. For example, the phone could be connected to a vehicle mounted touch display and thus controlled from the display. In case the display not is a touch display, the phone may be controlled by ordinary vehicle control levers and buttons functionally connected to the display. In case the phone will be connected to a display of the vehicle and controlled from the display or by vehicle mounted control levers, the location of the phone holder may be anywhere where it is suitable, and preferably easy to, insert the phone without having a need to see or access the phone during driving. However, if the phone holder not will be used for connecting the phone to the vehicle electronic system or only connected for charging purposes, there may be a desire to access the phone itself, and being able to see the phone display, during driving, e.g. to use a GPS navigation system of the phone. In this case, the phone should be mounted in an area where it is easily visible and accessible during driving. An attachment portion of the phone holder for attaching the phone holder to a vehicle should thus be located at a desired position depending on the intended use of the phone while driving. For example, if the phone is connected to the vehicle electronics and may be controlled by in-vehicle control arrangements could the phone holder be located between the seats where it is easily accessible for inserting or releasing the phone while being seated in the driver's seat but not easily seen while driving.

The invention can be applied in different types of vehicles, such as cars, trucks, and buses. Further advantages and advantageous features of the invention are disclosed in the following description and in the dependent claims.

### BRIEF DESCRIPTION OF THE DRAWINGS

Further objects, features, and advantages of the present disclosure will appear from the following detailed description, wherein certain aspects of the disclosure will be described in more detail with reference to the accompanying drawings, in which:

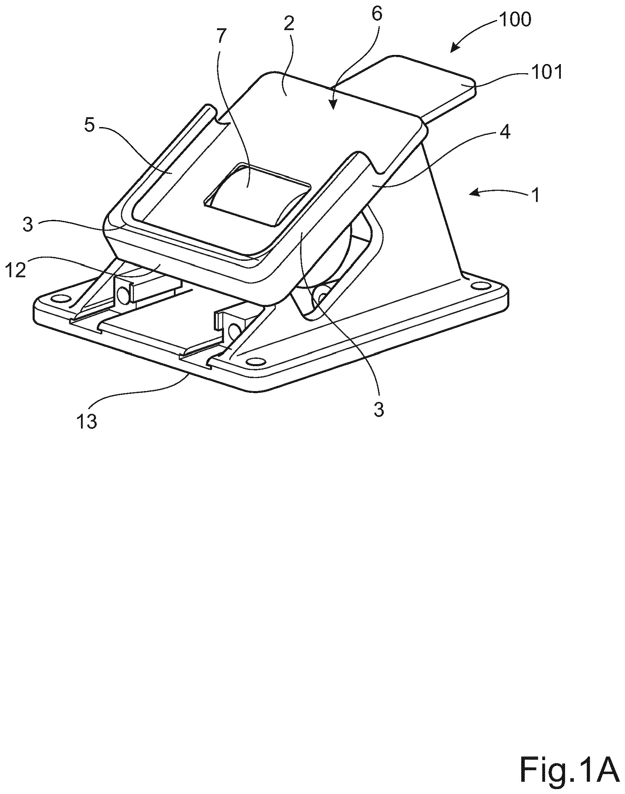

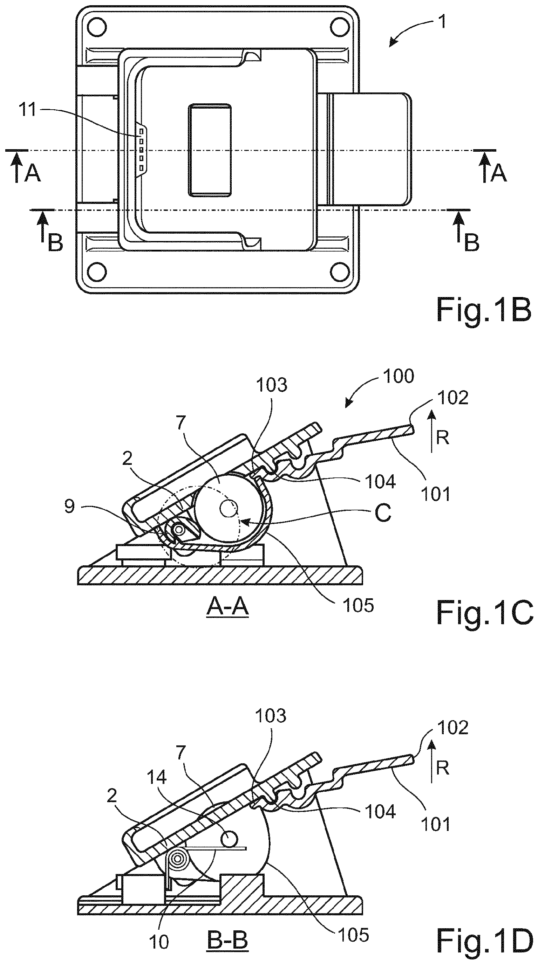

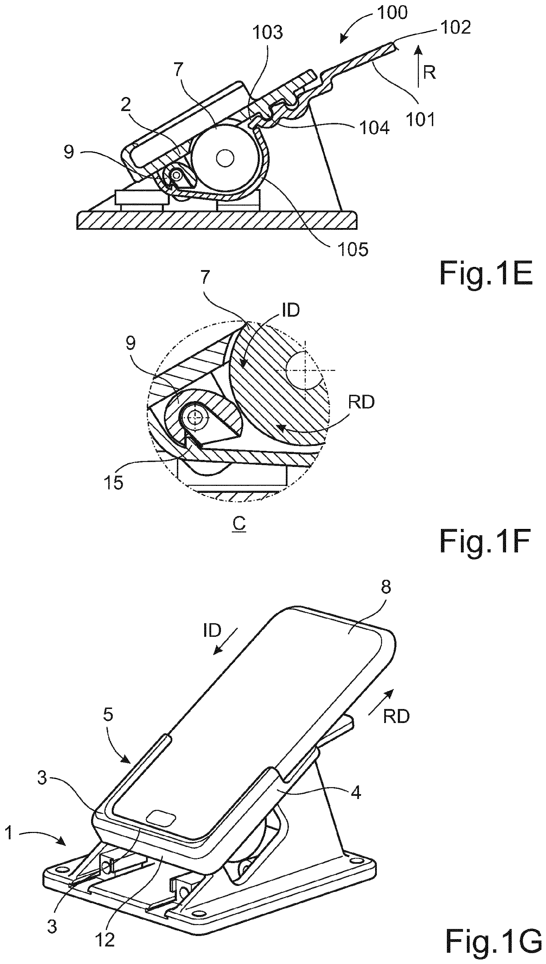

- Fig. 1 a: shows an isometric view of a phone holder for a vehicle according to a first embodiment of the invention: and
- Fig. 1 b: shows a view from above of the phone holder of figure 1a: and
- Fig. 1 c: shows a cross sectional view from the side of the phone holder along line A ---A in figure 1b when being in an insert mode: and
- Fig. 1 d: shows a cross sectional view from the side of the phone holder along line B ---B in figure 1b when being in an insert mode: and
- Fig. 1 e: shows a cross sectional view from the side of the phone holder along line A ---A in figure 1b when being in a release mode: and
- Fig. 1 f: shows a detailed view of the area C from figure 1c disclosing a latch mechanism ; and
- Fig. 1 g: shows the phone holder of figure 1a provided with a phone; and
- Fig. 2 a: shows an isometric view of a phone holder for a vehicle according to a second embodiment of the invention; and

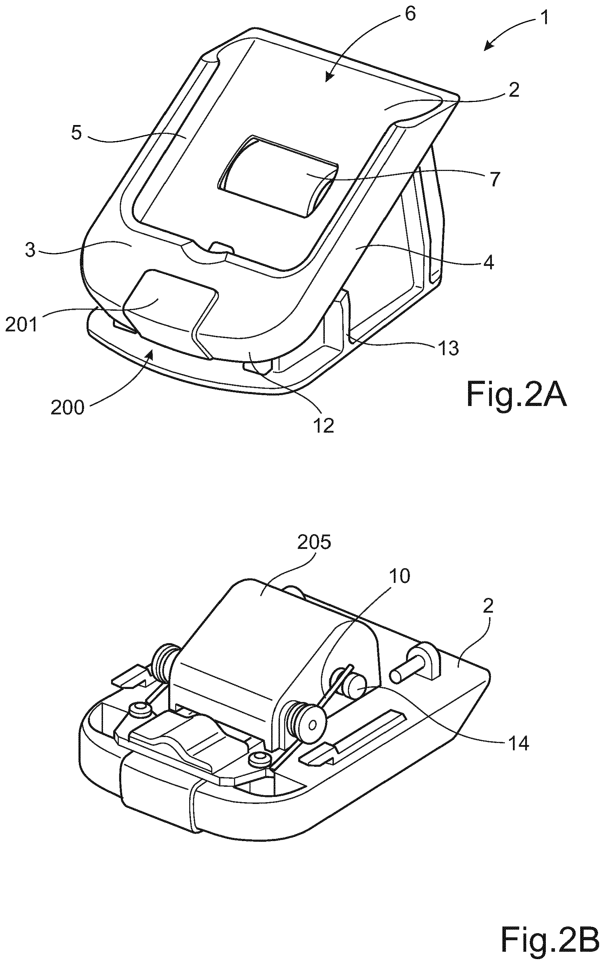

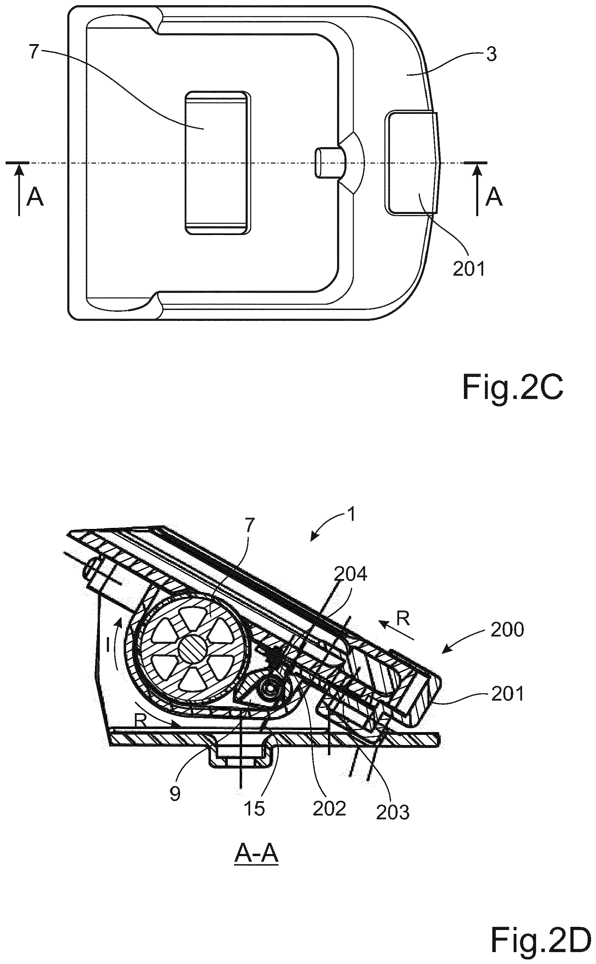

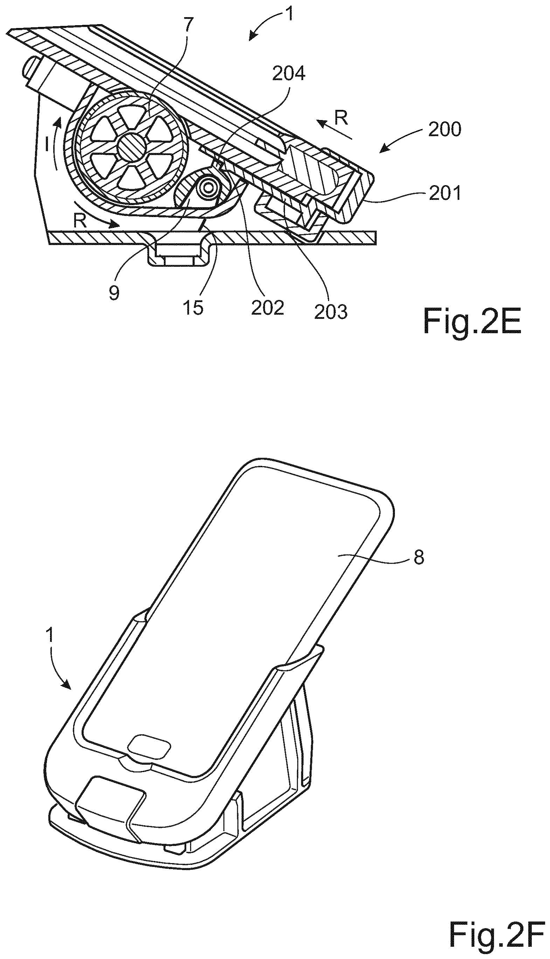

- Fig. 2 b: shows a view of the underside of the phone holder of figure 2a; and
- Fig. 2 c: shows a view from above of the phone holder of figure 2a; and
- Fig. 2 d: shows a cross sectional view from the side of the phone holder along line A ---A in figure 2c when in an insert mode; and
- Fig. 2 e: shows a cross sectional view from the side of the phone holder along line A ---A in figure 2c when in a release mode; and
- Fig. 2 f: shows the phone holder of figure 2a provided with a phone

### DETAILED DESCRIPTION

Different embodiments of the present invention will be described with reference to the accompanying drawings. The arrangements described below can be realized in many different forms and should not be construed as being limited to the embodiments described below.

With reference to Fig. 1a-g is a first embodiment of the invention shown. In figure 1a is shown an isometric view of a phone holder 1. The phone holder 1 comprises a rear support structure 2, intended to face a backside of a phone 8 (see figure 1g), and a front support structure 3, intended to face a front side of a phone 8. The phone holder 1 further comprises a right side support structure 4 and a left side support structure 5 in order to align a phone in the phone holder 1. The support structures 2, 3, 4, 5 define a slot opening 6 through which a phone 8 may be inserted. In order to stop at a desired position, the phone holder 1 is provided with a lower stop structure 12. The stop structure may be provided with connectors 11 for connecting a phone 8 to be charged or connected to a vehicle electronic system. The phone holder 1 needs to be attached to the interior of a vehicle and may either be attached by a separate attachment structure or an integrated attachment portion 13 which is specifically designed for attaching the phone holder 1 to a vehicle.

The phone holder 1 is further provided with a rotatable member 7 which in this case is exemplified as a roll or wide wheel located in the centre portion of the rear support structure 2. The rotatable member 7 rotates around a centre axle 14 which is resiliently suspended by a spring arrangement 10. The rotatable member 7 is in contact with a latch 9 (see figure 1c and an enlargement in figure 1f) designed to allow the rotatable member to rotate in the insertion direction, ID, while preventing the rotatable member from being able to rotate in a release direction, RD. By ID is meant the direction in which a phone 8 is moved in order to be placed in the phone holder 1 and by RD is meant the direction in which a phone 8 is moved in order to be taken out of the phone holder 1. Hence, the latch 9 is designed to allow insertion of a phone 8 in the insertion direction ID while preventing a phone 8 from being moved in the release direction RD when the rotatable member 7 is in contact with a phone 8 in the phone holder 1. The function of the latch may be best seen in figure 1f where it may be seen that the latch 9 is pressed against the surface of the rotatable member 7 by means of a spring 15. The geometrical configuration of the latch 9 is designed such that when the rotatable member is influenced by a turning force in the release direction RD will the surface friction between the latch 9 and the rotatable member 7 cause the arrangement to be stuck and prevent rotation of the rotatable member 7. On the other hand, when the rotatable member 7 is turned in the other direction, i.e. the insertion direction ID, will the geometrical configuration of the latch 9 allow the rotatable member to rotate.

The phone holder is also provided with a control mechanism 100 which is used to switch the phone holder 1 from being in a first insertion mode (I) and a second, release mode (II). The control mechanism 100, which in this case comprises a resilient flap 101, is designed to, when being pressed upon its free end 102 upwards in the release direction R (see fig 1c-e), change the phone holder from being in a first insertion mode (I) to a second, release mode (II). The change from the first mode to the second mode is caused by the flap 101 performing a pivotal motion by engaging with an anvil 104 such that the remote end portion 103 will cause a casing 105, to which the axle 14 of the rotatable member 7 is attached, to move away from the rear support structure 2. The change of modes is thus caused by moving the rotatable member 7 relative the rear support structure. In the first, insertion mode (I) is the rotatable member located in a position in which a phone 8 inserted in the phone holder 1 is in contact with the rotatable member 7 when the control mechanism 100 and its flap 101 are at rest. This first insertion mode (I) is exemplified in figure 1d. In this mode may thus a phone 8 only be moved in the insertion direction ID when located in the phone holder 1. If the phone 8 is tried to be moved in the release direction RD will the latch 9 prevent the rotatable member 7 from rotating and thus causing the phone 8 not to move. When the flap 101 is being pressed upon will the rotatable member 7 change its position to a position in which a phone 8 inserted in the phone holder 1 not is in contact with the rotatable member 7 and the mode is changed by the control mechanism 100. This configuration thus corresponds to the second release mode (II) in which a phone 8 inserted in the phone holder 1 may be moved in the release direction RD since the retaining force from the rotatable member 7 no longer is working on the phone 8. This second release mode (II) is illustrated in figure 1e in which the control mechanism 100 has been pressed upwards such that the surface of the rotatable member 7 is lowered below the surface level of the rear support structure 2 facing towards the space where a phone 8 is intended to be located.

In figures 2a-f is a second embodiment of the invention shown. In figure 2a is an isometric view shown of a phone holder 1 having the same kind of support structures 2,3,4,5 defining a slot 6, a lower stop structure 12, an attachment portion 13 and a rotatable member 7 as described for the device of figure 1. The second embodiment differs in that there is a different control mechanism 200, comprising a push button 201, in the lower support structure 12 to be used to switch the phone holder from the first, insertion mode (I) to the second, release mode (II). In figure 2b is shown the backside of the rear support structure 2 which is provided with a casing 205 comprising the rotatable member 7 (see figure 2a) which is attached to a centre axle 14 resiliently pressed towards the rear support structure 2 by a spring arrangement 10. A cross sectional view along line A ---A in figure 2c, disclosing a view from above of the phone holder, is disclosed in figure 2d. In figure 2d is the phone holder 1 shown when it is in its first, insertion mode (I). In this cross sectional view is it shown how the rotatable member 7 is placed next to and in contact with a latch 9 being pressed against the rotatable member by a spring 15 in an arrangement corresponding to the one described for the first embodiment. However, the principle for switching between the first, insertion mode (I) and the second, release mode (II) is based on controlling the latch 9 instead of moving the relative position of the rear support plate 2 and the rotatable member 7 as for the first embodiment disclosed in figure 1. In order to change the mode of the phone holder 1 the push button 201 is connected to an actuator protrusion 202 located on a shank (or pair of shanks) 203. The actuator protrusion 203 is designed to be able to engage with a latch protrusion 204. When the push button 201 is at rest, as disclosed in figure 2d, is the latch 9 in contact with the rotatable member 7 and thus work as a brake in the release direction, R.

When the push button 201 is pressed upon will the actuator protrusion 203 engage with and press on the latch protrusion 204 thus causing the latch 9 to rotate around its axle such that it no longer is in contact with the rotatable member 7. This configuration is disclosed in figure 2e where it may be noticed that the push button 201 is completely pressed until its stop position is reached and there is a space between the rotatable member 7 and the latch 9 allowing the rotatable member to rotate in both insertion (I) and release (R) direction.

Hence, when there is a phone 8 present in the phone holder 1, as disclosed in figure 2f, will it be maintained in its position as long as the phone holder is in its first, insertion mode (I) as disclosed in figure 2d. When the push button 201 is pressed upon will the mode change to the second, release mode (II) by causing the latch 9 to be released and allow the rotatable member to rotate in both the release (R) and insertion (I) direction, as disclosed in figure 2e, whereby a phone 8 in the phone holder 1 may be released and removed from the phone holder 1. The above described embodiments only serve as examples of how the invention may be designed. For example, the latch may be substituted for other arrangements function to prevent the rotatable member from rotating freely in a desired direction and thus also other arrangements of the release mechanism may be used. Likewise, the arrangements of the support structures may be designed otherwise, e.g. may it be sufficient with a single side support structure to be used for aligning the phone instead of using both a left and right side support structure enabling different sizes of the width of a phone to be used in the same phone holder.

## Claims

1. A phone holder (1) for a vehicle, said phone holder (1) comprising a rear support structure (2) intended to face a backside of a phone (8) and a front support structure (3) intended to face a front side of a phone (8), said phone holder further comprising side support structure (4, 5) in order to align a phone in the phone holder (1), the support structures (2, 3, 4, 5) defining a slot opening (6) through which a phone (8) may be inserted, said phone holder (1) is further provided with a rotatable member (7) provided in one of the support structures (2, 3, 4, 5), said rotatable member (7) further having a control mechanism (100, 200) which may be set in a first insertion mode (I) and further having a second, release mode (II) in which a phone (8) may be moved in the phone holder (1) in the release direction (RD) without being prevented by the rotatable member (7)
**characterized in that**
in the first insertion mode (I) is the rotatable member (7) designed to be in contact with a phone (8) when being inserted in the phone holder (1) and said rotatable member (7) may rotate freely in the insertion direction (ID) while having a latch (9) preventing the rotatable member from being able to rotate in the release direction (RD) in order to allow insertion of a phone (8) in the insertion direction (ID) while preventing a phone (8) from being moved in the release direction (RD).

2. A phone holder (1) according to claim 1 **characterized in that** said control mechanism (100) is designed to change from the first, insertion mode (I) to the second, release mode (II) by moving the rotatable member (7) away from being located in a position in which a phone (8) inserted in the phone holder is in contact with the rotatable member (7) to a position in which a phone (8) inserted in the phone holder (1) not is in contact with the rotatable member (7).

3. A phone holder (1) according to claim 1 **characterized in that** said control mechanism (200) is designed to change from the first, insertion mode (I) to the second, release mode (II) by disconnecting the latch (9) of the rotatable member (7) and thus allowing the rotatable member to rotate freely in the release direction (RD).

4. A phone holder (1) according to any previous claims **characterized in that** said rotatable member (7) is designed to resiliently pressing on a phone (8) in the phone holder when the control mechanism (100, 200) is set in the first, insertion mode (I).

5. A phone holder (1) according to claim 4 **characterized in that** said rotatable member (7) is designed to be attached to the phone holder (1) by having an axle (14) being attached to a casing (105, 205) comprising the rotatable member 7 by springs (10) pressing the axle (14) towards the rear support structure (2).

6. A phone holder (1) according to claim 4 **characterized in that** said rotatable member (7) is designed to be made by a resilient material.

7. A phone holder (1) according to any previous claim **characterized in that** the rotatable member (7) is pressing with a force corresponding to at least 15 Newton, preferably at least 30 Newton, against a phone (8) comprised in the phone holder.

8. A phone holder (1) according to any previous claim **characterized in that** the surface of the rotatable member (7) is made of a sticky material.

9. A phone holder (1) according to any previous claim **characterized in that** the rotatable member (7) is comprised in the rear support structure (2).

10. A phone holder (1) according to any previous claim **characterized in that** there is a second rotatable member (7') present in the phone holder (1) which is located on a support structure (2, 3, 4, 5) different from the one which the first rotatable member (7) is located.

11. A phone holder (1) according to any previous claim **characterized in that** there are connectors (11) located in a lower stop structure (12) for electrically connecting a phone (8) inserted in the phone holder (1) to vehicle on board electronics.

12. A phone holder (1) according to any previous claim **characterized in that** it comprises an attachment portion (13) for attaching the phone holder (1) to a vehicle.

13. A vehicle comprising a phone holder (1) according to any of claims 1 to 12.

## Patentansprüche

1. Telefonhalter (1) für ein Fahrzeug, wobei der Telefonhalter (1) eine hintere Haltestruktur (2), die dazu vorgesehen ist, einer Rückseite eines Telefons (8) zugewandt zu sein, und eine vordere Haltestruktur (3), die dazu vorgesehen ist, einer Vorderseite eines Telefons (8) zugewandt zu sein, umfasst, wobei der Telefonhalter ferner eine seitliche Haltestruktur (4, 5) umfasst, um ein Telefon in dem Telefonhalter (1) auszurichten, wobei die Haltestrukturen (2, 3, 4, 5) eine Schlitzöffnung (6) festlegen, durch die ein Telefon (8) eingesetzt werden kann, wobei der Telefonhalter (1) ferner mit einem Drehelement (7) versehen ist, das in einer der Haltestrukturen (2, 3, 4, 5) vorgesehen ist, wobei das Drehelement (7) ferner einen Steuermechanismus (100, 200) aufweist, der in einen ersten Einsetzmodus (I) versetzt werden kann, und ferner einen zweiten Ausgabemodus (II) umfasst, in dem ein Telefon (8) in der Freigaberichtung (RD) in dem Telefonhalter (1) bewegt werden kann, ohne durch das Drehelement (7) behindert zu werden,
**dadurch gekennzeichnet, dass**
das Drehelement (7) in dem ersten Einsetzmodus (I) dazu ausgelegt ist, sich in Kontakt mit einem Telefon (8) zu befinden, wenn es in dem Telefonhalter (1) eingesetzt ist, und sich das Drehelement (7) frei in der Einsetzrichtung (ID) drehen kann, während es eine Verriegelung (9) aufweist, die verhindert, dass sich das Drehelement in der Freigaberichtung (RD) drehen kann, um ein Einsetzen eines Telefons (8) in der Einsetzrichtung (ID) zu ermöglichen und gleichzeitig zu verhindern, dass ein Telefon (8) in der Freigaberichtung (RD) bewegt wird.

2. Telefonhalter (1) nach Anspruch 1, **dadurch gekennzeichnet, dass** der Steuermechanismus (100) dazu ausgelegt ist, aus dem ersten Einsetzmodus (I) in den zweiten Freigabemodus (II) durch Bewegen des Drehelements (7) weg aus einer Stellung, in der sich ein in dem Telefonhalter eingesetztes Telefon (8) in Kontakt mit dem Drehelement (7) befindet, in eine Stellung, in der sich ein in dem Telefonhalter (1) eingesetztes Telefon (8) nicht in Kontakt mit dem Drehelement (7) befindet, zu wechseln.

3. Telefonhalter (1) nach Anspruch 1, **dadurch gekennzeichnet, dass** der Steuermechanismus (200) dazu ausgelegt ist, aus dem ersten Einsetzmodus (I) in den zweiten Freigabemodus (II) zu wechseln, indem die Verriegelung (9) des Drehelements (7) gelöst und somit ermöglicht wird, dass sich das Drehelement frei in der Freigaberichtung (RD) bewegt.

4. Telefonhalter (1) nach einem der vorhergehenden Ansprüche, **dadurch gekennzeichnet, dass** das Drehelement (7) dazu ausgelegt ist, auf federnde Weise auf ein Telefon (8) in dem Telefonhalter zu drücken, wenn sich der Steuermechanismus (100, 200) in dem ersten Einsetzmodus (I) befindet.

5. Telefonhalter (1) nach Anspruch 4, **dadurch gekennzeichnet, dass** das Drehelement (7) dazu ausgelegt ist, an dem Telefonhalter (1) angebracht zu sein, indem es eine Achse (14) aufweist, die an einem Gehäuse (105, 205) angebracht ist, das das Drehelement (7) umfasst, über Federn (10), die die Achse (14) zu der hinteren Haltestruktur (2) drücken.

6. Telefonhalter (1) nach Anspruch 4, **dadurch gekennzeichnet, dass** das Drehelement (7) dazu ausgelegt ist, aus einem elastischen Material hergestellt zu sein.

7. Telefonhalter (1) nach einem der vorhergehenden Ansprüche, **dadurch gekennzeichnet, dass** das Drehelement (7) mit einer Kraft, die wenigstens 15 Newton, vorzugsweise wenigstens 30 Newton entspricht, gegen ein in dem Telefonhalter enthaltenes Telefon (8) drückt.

8. Telefonhalter (1) nach einem der vorhergehenden Ansprüche, **dadurch gekennzeichnet, dass** die Oberfläche des Drehelements (7) aus einem klebenden Material hergestellt ist.

9. Telefonhalter (1) nach einem der vorhergehenden Ansprüche, **dadurch gekennzeichnet, dass** das Drehelement (7) in der hinteren Haltestruktur (2) enthalten ist.

10. Telefonhalter (1) nach einem der vorhergehenden Ansprüche, **dadurch gekennzeichnet, dass** ein in dem Telefonhalter (1) vorhandenes zweites Drehelement (7') vorliegt, das sich an einer anderen Haltestruktur (2, 3, 4, 5) befindet als derjenigen befindet, an der sich das erste Drehelement (7) befindet.

11. Telefonhalter (1) nach einem der vorhergehenden Ansprüche, **dadurch gekennzeichnet, dass** sich Anschlüsse (11) in einer unteren Anschlagstruktur (12) befinden, um ein in dem Telefonhalter (1) eingesetztes Telefon (8) elektrisch an die im Fahrzeug bordseitig vorhandene Elektronik anzuschließen.

12. Telefonhalter (1) nach einem der vorhergehenden Ansprüche, **dadurch gekennzeichnet, dass** er einen Anbringungsabschnitt (13) umfasst, um den Telefonhalter (1) in einem Fahrzeug anzubringen.

13. Fahrzeug, das einen Telefonhalter (1) nach einem der Ansprüche 1 bis 12 umfasst.

## Revendications

1. Support de téléphone (1) pour un véhicule, ledit support de téléphone (1) comprenant une structure de support arrière (2), destinée à faire face au dos d'un téléphone (8), et une structure de support avant (3) destinée à faire face à un côté avant d'un téléphone (8), ledit support de téléphone comprenant en outre une structure de support latérale (4, 5) ayant pour fonction d'aligner un téléphone dans le support de téléphone (1), les structures de support (2, 3, 4, 5) définissant une ouverture fendue (6) à travers laquelle un téléphone (8) peut être inséré, ledit support de téléphone (1) étant en outre pourvu d'un élément rotatif (7) prévu dans une des structures de support (2, 3, 4, 5), ledit élément rotatif (7) comprenant en outre un mécanisme de commande (100, 200) qui peut être placé dans un premier mode d'insertion (I) et qui présente en outre un second mode de libération (II) dans lequel un téléphone (8) peut être déplacé dans le support de téléphone (1) dans la direction de libération (RD) sans en être empêché par l'élément rotatif (7),
**caractérisé en ce que**, dans le premier mode d'insertion (I), l'élément rotatif (7) est conçu de manière à se trouver en contact avec un téléphone (8) lorsque celui-ci est inséré dans le support de téléphone (1), et ledit élément rotatif (7) peut tourner librement dans la direction d'insertion (ID) tout en comportant un verrou (9) qui empêche l'élément rotatif de pouvoir tourner dans la direction de libération (RD) dans le but de permettre l'insertion d'un téléphone (8) dans la direction d'insertion (ID) tout en empêchant un téléphone (8) d'être déplacé dans la direction de libération (RD).

2. Support de téléphone (1) selon la revendication 1, **caractérisé en ce que** ledit mécanisme de commande (100) est conçu de manière à basculer du premier mode d'insertion (I) dans le second mode de libération (II) en déplaçant l'élément rotatif (7) à l'écart de sa situation dans une position dans laquelle un téléphone (8) inséré dans le support de téléphone est en contact avec l'élément rotatif (7) dans une position dans laquelle un téléphone (8) inséré dans le support de téléphone (1) n'est pas en contact avec l'élément rotatif (7).

3. Support de téléphone (1) selon la revendication 1, **caractérisé en ce que** ledit mécanisme de commande (200) est conçu de manière à basculer du premier mode d'insertion (I) dans le second mode de libération (II) en déconnectant le verrou (9) de l'élément rotatif (7) et en permettant ainsi à l'élément rotatif de tourner librement dans la direction de libération (RD).

4. Support de téléphone (1) selon l'une quelconque des revendications précédentes, **caractérisé en ce que** ledit élément rotatif (7) est conçu de manière à exercer une pression élastique sur un téléphone (8) dans le support de téléphone lorsque le mécanisme de commande (100, 200) est placé dans le premier mode d'insertion (I).

5. Support de téléphone (1) selon la revendication 4, **caractérisé en ce que** ledit élément rotatif (7) est conçu de manière à être attaché au support de téléphone (1) en présentant un axe (14) qui est attaché à une enceinte (105, 205) comprenant l'élément rotatif (7) à l'aide de ressorts (10) qui pressent l'axe (14) en direction de la structure de support arrière (2).

6. Support de téléphone (1) selon la revendication 4, **caractérisé en ce que** ledit élément rotatif (7) est conçu de manière à être constitué d'un matériau élastique.

7. Support de téléphone (1) selon l'une quelconque des revendications précédentes, **caractérisé en ce que** l'élément rotatif (7) exerce une pression dont la force correspond à au moins 15 Newton, de préférence à au moins 30 Newton, contre un téléphone (8) logé dans le support de téléphone.

8. Support de téléphone (1) selon l'une quelconque des revendications précédentes, **caractérisé en ce que** la surface de l'élément rotatif (7) est constituée d'un matériau adhésif.

9. Support de téléphone (1) selon l'une quelconque des revendications précédentes, **caractérisé en ce que** l'élément rotatif (7) est incorporé dans la structure de support arrière (2).

10. Support de téléphone (1) selon l'une quelconque des revendications précédentes, **caractérisé en ce qu'**un second élément rotatif (7') est prévu dans le support de téléphone (1) et est situé sur une structure de support (2, 3, 4, 5) différente de celle sur laquelle le premier élément rotatif (7) est situé.

11. Support de téléphone (1) selon l'une quelconque des revendications précédentes, **caractérisé en ce que** des connecteurs (11) sont prévus et installés dans une structure d'arrêt inférieure (12) afin de connecter électriquement un téléphone (8) inséré dans le support de téléphone (1) à un système électronique embarqué du véhicule.

12. Support de téléphone (1) selon l'une quelconque des revendications précédentes, **caractérisé en ce qu'**il comprend une partie de fixation (13) pour attacher le support de téléphone (1) à un véhicule.

13. Véhicule comprenant un support de téléphone (1) selon l'une quelconque des revendications 1 à 12.
